# EUROPÄISCHE PATENTSCHRIFT

(11) **EP 3 652 378 B1**
(45) Veröffentlichungstag und Bekanntmachung des Hinweises auf die Patenterteilung: **04.09.2024**
(21) Anmeldenummer: 18731082.6
(22) Anmeldetag: 13.06.2018
(51) Int. Cl.: D21F 3/02

(54) **PRESSMANTEL UND DESSEN VERWENDUNG**
PRESS JACKET AND USE THEREOF
CHEMISE DE PRESSE ET SON UTILISATION

(30) Priorität: 12.07.2017 DE 102017115592
(43) Veröffentlichungstag der Anmeldung: 20.05.2020
(73) Patentinhaber: Voith Patent GmbH, 89522 Heidenheim (DE)
(72) Erfinder: DELMAS, Delphine, 89522 Heidenheim (DE); MATUSCHCZYK, Uwe, 73312 Geislingen (DE); REICHERT, Hermann, 89522 Heidenheim/Oggenhausen (DE); WOKUREK, Michael, 2640 Gloggnitz (AT)
(74) Vertreter: Voith Patent GmbH - Patentabteilung
(86) Internationale Anmeldenummer: PCT/EP2018/065576
(87) Internationale Veröffentlichungsnummer: WO 2019/011557

(56) Entgegenhaltungen:
- EP-A1- 1 985 750
- EP-A1- 3 282 052
- WO-A1-2016/163350
- DE-A1- 102013 222 458
- DE-A1- 102015 217 942
- US-A1- 2015 308 044

## Beschreibung

Die Erfindung geht aus von einem Pressmantel, insbesondere für eine Pressvorrichtung zur Behandlung einer Faserstoffbahn, z.B. zu deren Glättung oder Entwässerung, wie z.B. aus DE 10 2013 222458 A1 bekannt.

Pressenvorrichtungen wie Schuhpressen sind seit langem Bestandteil moderner Papiermaschinen. Sie umfassen im Wesentlichen einen stationär angeordneten Schuh (auch Pressschuh genannt), welcher sich in einer Maschinenquerrichtung erstreckt und einen um den stationären Schuh umlaufenden Pressmantel. Letzter ist verformbar und nimmt im Betrieb im Wesentlichen eine rohrartige Form an. Der Schuh ist so geformt, dass er mit einer Gegenwalze einen Pressnip (Pressspalt) bildet. Der Pressnip ist durch die Anlagefläche der Gegenwalze im Schuh definiert. Der Schuh ist beweglich ausgeführt und kann an die Gegenwalze bewegt werden.

An den Pressmantel werden enorme Anforderungen in Bezug auf seine Stabilität gestellt, nämlich hinsichtlich Oberflächenhärte, Beständigkeit gegen Druck, Temperatur und Hydrolyse. Der Pressmantel ist zudem während des Betriebs starken Biegewechselbelastungen ausgesetzt. Beim Einlaufen am Schuhrand - in Drehrichtung des Pressmantels gesehen vor dem Pressnip - erfolgt zunächst eine Biegung unter einem verhältnismäßig kleinen Radius. Diese geht sofort in eine gegenläufige Biegung beim Durchlaufen des Pressnips über. Beim Auslaufen am anderen Schuhrand, also - in Drehrichtung des Pressmantels gesehen nach dem Pressnip - erfolgt wieder eine gegenläufige Biegung. Diese Verformung des Pressmantels beim Ein- und Auslaufen wird auch als Wechselnip bezeichnet. Es ist leicht ersichtlich, dass die Neigung des Pressmantels, besonders an dieser Stelle zu brechen, durch die hohe mechanische Beanspruchung sehr groß ist. Entsprechend sind aus dem Stand der Technik viele Maßnahmen bekannt, die die Stabilität des Pressmantels erhöhen sollen.

Der Pressmantel muss somit ausreichend flexibel sein, damit er sich um den Schuh führen lässt, er muss ausreichend steif sein, damit er sich im Nip unter der Presslast nicht zu stark verformt oder komprimiert, und er muss ausreichend verschleißfest sein. Pressmäntel bestehen deshalb aus einer ein- oder mehrlagigen Polymerschicht, bevorzugt aus Polyurethan, in die Verstärkungsfäden in Form von Gelegen oder Geweben eingebettet sein können.

Die vorliegende Erfindung betrifft derartige eingangs genannte Gegenstände.

Pressmäntel sind unter anderem aus US 2015/0308044 A1 sowie DE 69701221 T2 bekannt geworden.

Obwohl aus dem Stand der Technik bekannte Pressmäntel eine ausreichende Flexibilität und gleichzeitig ausreichende Steifigkeit aufweisen, sind deren chemische Beständigkeit insbesondere gegenüber Wasser und Öl, deren Abriebsfestigkeit, deren Beständigkeit gegen Rissbildung und Risswachstum und deren Quellverhalten verbesserungsbedürftig.

Es ist entsprechend Aufgabe der Erfindung, einen Pressmantel, welcher die Nachteile des Standes der Technik vermeidet.

Die Aufgabe wird durch die Merkmale der unabhängigen Ansprüche gelöst. Besonders bevorzugte und vorteilhafte Ausführungsformen der Erfindung sind in den Unteransprüchen wiedergegeben.

Der vorliegenden Erfindung liegt eine einzige allgemeine Idee zugrunde, nämlich durch den Einsatz von Naphthalen-1,5-diisocyanat (NDI) als Isocyanat und wenigstens einem Polyol, das ausgewählt ist aus einem Polycarbonat-Polyol, einem Polyether-Polycarbonat-Polyol oder Mischungen dieser beiden in der zumindest einen Polymerschicht des Pressmantels den eingangs genannten Nachteilen wirkungsvoll zu begegnen.

PPDI- bzw. NDI-basierte Polymerschichten führen mit dem eingangs genannten erfindungsgemäßen Polyol zu einer überraschenderweise hohen Flexibilität, hohen Steifigkeit und chemischen Beständigkeit insbesondere gegenüber Wasser und Öl. Gleichzeitig erhöht sich deren Abriebsfestigkeit, Rissbildungsbeständigkeit, Risswachstumsbeständigkeit und deren Quellverhalten. Dies zeigt sich besonders, wenn der Pressmantel gerillt ist, also an dessen radial äußerster Mantelfläche (bzw. an der entsprechenden Mantelfläche der radial äußersten Polymerschicht) über den Umfang verteilt angeordnete Rillen aufweist. Die die Rillen begrenzenden Stege der Polymerschicht, in welche die Rillen eingearbeitet sind, halten dann dem Wechselnip besonders gut stand. Sie verformen sich weniger stark als die von bekannten Pressmänteln. Dadurch bleibt das Entwässerungsvolumen des Pressmantels, das die Rillen mit der Gegenwalze im Nip zusammen begrenzen, konstant. Hierdurch wird eine gleichbleibende Entwässerungsleistung im Nip bereitgestellt.

Es hat sich gezeigt, dass NDI im Vergleich zu PPDI für gewisse Anwendungsfälle die erfindungsgemäßen Vorteile besonders gut erfüllt.

Wenn gemäß der Erfindung davon die Rede ist, das etwas aus einem Stoff hergestellt ist, dass ist damit gemeint, dass es teilweise oder vollständig aus einem solchen Stoff hergestellt ist.

Wird im Sinne der Erfindung von einem Isocyanat gesprochen, so ist ein Polyisocyanat, wie Diisocyanat gemeint.

Im Sinne der Erfindung ist mit einer Pressvorrichtung beispielsweise eine Schuhpresse z.B. zur Entwässerung oder Behandlung, wie Glättung einer Faserstoffbahn gemeint. Die Schuhpresse umfasst eine Schuhpresswalze und eine Gegenwalze, die zusammen einen Pressnip ausbilden oder begrenzen. Die Schuhpresswalze umfasst ferner einen umlaufenden Pressmantel und ein stehendes Presselement, den sogenannten Pressschuh. Letzterer stützt sich auf einem tragenden, ebenfalls stehenden Joch ab - beispielsweise über hydraulische Presselemente - und wird an den umlaufenden Pressmantel angedrückt. Der Pressmantel umläuft relativ zu dem feststehenden Pressschuh und Joch und wird dadurch im Pressnip an die Gegenwalze gepresst. Pressschuh und Joch sind radial innerhalb des Pressmantels angeordnet. Unter dem Begriff stehend wird verstanden, dass das Presselement nicht relativ zu der Schuhpresswalze oder der Gegenwalze umläuft, sich jedoch translatorisch - auf die Gegenwalze zu und von ihr weg, bevorzugt in Radialrichtung dieser - und damit relativ zu der Gegenwalze bewegen kann. Zusätzlich zur Faserstoffbahn und dem Pressmantel können ein oder mehrere in Umfangsrichtung endlos umlaufende Pressfilze und/oder weitere endlos umlaufende Pressbänder durch den Pressnip der Schuhpresse geführt werden. Eine solche Schuhpresse kann selbstverständlich mehr als einen Pressnip umfassen.

Unter einer Faserstoffbahn im Sinne der Erfindung ist ein Gelege bzw. Gewirre von Fasern, wie Holzfasern, Kunststofffasern, Glasfasern, Kohlenstofffasern, Zusatzstoffen, Additiven oder dergleichen zu verstehen. So kann die Faserstoffbahn beispielsweise als Papier-, Karton- oder Tissuebahn ausgebildet sein. Sie kann im Wesentlichen Holzfasern umfassen, wobei geringe Mengen anderer Fasern oder auch Zusatzstoffe und Additive vorhanden sein können. Dies bleibt je nach Einsatzfall dem Fachmann überlassen.

Unter einem Pressmantel im Sinne der Erfindung ist ein Band, Schlauch oder ein Mantel zu verstehen, das/der wie dargestellt, zusammen mit einer Faserstoffbahn durch den Pressnip einer Schuhpresse geführt wird. Zur Entwässerung der Faserstoffbahn kann im bestimmungsgemäßen Betrieb die radial äußerste Oberfläche (Polymerschicht) des Pressmantels mit einem Pressfilz in Kontakt kommen, von dem die zu entwässernde Faserstoffbahn direkt getragen wird. Je nach Ausführungsform der Presseinrichtung kann z.B. zur Glättung dieser der Pressmantel im bestimmungsgemäßen Betrieb auch direkt mit der Faserstoffbahn in Kontakt kommen. Der Pressmantel ist dabei als ein in Umfangsrichtung um dessen Längsachse endloser, geschlossener Mantel (Schlauch) ausgeführt. An seinen axialen Enden ist er - in Breitenrichtung gesehen (entlang der Längsachse) - offen. Damit kann der Pressmantel an diesen axialen Enden von zwei seitlichen Spannscheiben gehalten werden, um die Schuhpresswalze zu bilden. Anstatt der Führung durch die beiden seitlichen Spannscheiben kann der Pressmantel, wie es bei offenen Schuhpressen der Fall ist, über den Pressschuh und mehrere Leitwalzen geführt werden. Unabhängig davon, ob der Pressmantel von den Spannscheiben oder den Leitwalzen geführt ist, gelangt der Pressschuh (bzw. die Leitwalzen) mit einem Teil der radial innersten Oberfläche des Pressmantels (zeitweise) in Kontakt. Die radial äußerste Oberfläche eines solchen Pressmantels, also z.B. die radial äußerste Polymerschicht desselben kann mit Rillen und/oder Blindbohrungen versehen sein.

Der Pressmantel kann teilweise oder vollständig aus dem Polymer Polyurethan hergestellt sein.

Mit Polymerschicht ist eine Schicht gemeint, die ein solches gießbares, aushärtbares, bevorzugt elastomeres Polymer umfasst oder vollständig daraus hergestellt ist. Bevorzugt kann die Polymerschicht eine einteilig durch Urformen hergestellte, ausgehärtete Schicht sein. Anders ausgedrückt ist diese monolithisch urgeformt, also durch z.B. Gießen hergestellt. Der Begriff einteilig schließt auch Fälle ein, in denen die eine Schicht wiederum beim Gießen des Polymers aus mehreren Lagen gleichen Materials hergestellt wurde. Dies jedoch nur insoweit wie diese Lagen nach dem Aushärten im Wesentlichen nicht mehr sichtbar sind, sondern sich eine einzige, bevorzugt einheitliche Schicht ergibt. Selbiges gilt entsprechend für den fertigen Pressmantel.

Bei Vorsehen mehrerer Polymerschichten können diese in Radialrichtung gesehen - zumindest abschnittsweise über die Breite des Pressmantels - übereinander angeordnet sein. Zumindest abschnittsweise über der Breite des Pressmantels bedeutet, dass der Pressmantel z.B. an dessen axialen Enden nur einschichtig ist, wohingegen er zwischen den axialen Enden zwei- oder mehrschichtig ausgebildet ist. Anders ausgedrückt kann die Dicke des Pressmantels - und somit die Dicke der einzelnen Polymerschichten - in einem Schnitt durch dessen Längsachse abschnittsweise entlang der Längsachse variieren. So kann z.B. die radial äußerste Polymerschicht im Bereich der Breitenränder des Pressmantels geringer sein als in der Mitte des Pressmantels. Anders ausgedrückt kann im Bereich der Breitenränder die radial äußerste Polymerschicht weniger dick sein als eine radial innere oder radial innerste Polymerschicht. Bevorzugt ist/sind genau eine, zwei oder drei Polymerschichten vorgesehen. Diese können hinsichtlich ihres Polymers identisch ausgeführt sein oder hinsichtlich ihrer Härte oder Stöchiometrie des Präpolymers variieren. Eine Gesamtdicke des fertigen Pressmantels in einem Schnitt durch die Längsachse desselben in Radialrichtung gemessen kann 5 bis 10 mm, bevorzugt 5 bis 7, besonders bevorzugt 5 bis 6 mm betragen. Gemäß der Erfindung kann bei Vorsehen einer einzigen Schicht der Pressmantel aus nur einem Guss, d.h. monolithisch hergestellt sein, sodass die einzige Schicht die eben genannte Dicke aufweist.

Ein fertiger Pressmantel im Sinne der Erfindung ist ein solcher, dessen wenigstens eine Polymerschicht ausgehärtet und eventuell abschließend bearbeitet, also für den eingangs genannten Zweck in z.B. einer Schuhpresse einsatzbereit ist. Analog ist mit fertiger Polymerschicht eine Schicht gemeint, die ausgehärtet ist.

Grundsätzlich ist es denkbar, dass der Pressmantel eine Verstärkungsstruktur aufweist. Mit dem Begriff Verstärkungsstruktur im Sinne der Erfindung ist eine Verstärkung der wenigstens einen, das Polymer enthaltenden oder aus diesem bestehenden Schicht - also der Polymerschicht - gemeint. Dabei kann die Verstärkungsstruktur vollständig in die Polymerschicht eingebettet sein, sodass die Verstärkungsstruktur nicht über die Begrenzung der Polymerschicht hinausgeht. Anders ausgedrückt übernimmt die Polymerschicht die Rolle einer Matrix, welche die Verstärkungsstruktur umgibt und infolge von Adhäsions- oder Kohäsionskräften an die Matrix bindet. Eine solche Verstärkungsstruktur kann textile Liniengebilde - z. B. Garne oder Zwirne - und/oder textile Flächengebilde - wie z. B. Gewebe, Gewirke, Gestricke, Geflechte oder Gelege - umfassen und aus einem entsprechenden Ausgangsmaterial, z.B. durch Wickeln herstellbar sein. Unter Ausgangsmaterial wird jenes Material oder Halbzeug verstanden, mittels dem die Verstärkungsstruktur des erfindungsgemäßen fertigen Pressmantels hergestellt wird.

Mit dem Begriff Elastizitätsmodul (E-Modul) ist ein Materialkennwert aus der Werkstofftechnik gemeint, der den Zusammenhang zwischen Spannung und Dehnung bei der Verformung eines festen Körpers, hier des Polymers des Pressmantels bei linear-elastischem Verhalten beschreibt. Bei der Ermittlung des E-Moduls eines erfindungsgemäßen Polymers ist es meist vorteilhafter anstelle des E-Moduls, der auf Zug gemessen wird, der E-Modul auf Druck zu ermitteln. Dazu kann die Probe entsprechend derselben Haltezeit, wie bei der Shore A-Härtemessung (hier z.B. 15 s) bei 2 % Dehnung ermittelt werden. Dies hat den Vorteil, dass die Messbedingungen den üblichen Bedingungen zur E-Modul-Bestimmung im Kurzzeit-Zugversuch entsprechen. Dabei ist das Verformungsverhalten der Probe nahezu linear, die Drucksteifigkeit entspricht dann im Wesentlichen der Zugsteifigkeit.

Gemäß der Erfindung kann der Vernetzer 1,4-Butandiol oder 1,4-Hydroquinone bis(2-hydroxyethyl)ether, MCDEA (oder Mischungen aus diesen) bzw. wenigstens ein aliphatisches oder aromatisches Diamin oder Alkanolamin aufweisen.

Ist die Rede von aliphatisch, dann fällt hierunter auch der Begriff cycloaliphatisch.

Die Prozentanteile der Komponenten des Vernetzers können so gewählt werden, dass sie in ihrer Gesamtsumme nicht über 100% mol hinausgehen.

Grundsätzlich wäre es denkbar, dass der Vernetzer eine weitere Komponente aufweist, welche ausgewählt ist aus wenigstens einem Polyol, bevorzugt bifunktionellem Polyol, dessen Molekulargewicht bevorzugt 1.000 bis 4.000 g/mol beträgt, und bevorzugt zwischen 1.200 bis 3.500 g/mol liegt, wie Polyesterpolyol, insbesondere Polycaprolactonpolyol; Polyetherpolyole, insbesondere Polytetramethylenetherglycol (PTMEG), Polypropylenglycol (PPG), Polyethylenglycol (PEG) Polyhexamethylenetherglycol, Polycarbonatpolyol, Polyethercarbonatpolyol, Polybutadienepolyol, Perfluoropolyetherpolyol, Silikonpolyol oder Mischungen daraus.

Der Teilchenzahlanteil (d.h. die % mol-Angabe) der jeweiligen Komponente des Vernetzers kann auf die Gesamtteilchenzahl aller Komponenten (der Gesamtmischung) des Vernetzers bezogen sein oder aber nur auf den Anteil der Teilchen von Komponenten des Vernetzers, die funktionelle Gruppen, wie aktive Wasserstoffatome (z.B. Hydroxyl und primär bzw. sekundäre Amine) tragende Moleküle aufweisen.

Die erfindungsgemäßen Komponenten können z.B. gemäß dem erfindungsgemäßen Verfahren dem Vernetzer zugegeben werden, bevor sie mit dem Präpolymer reagiert werden.

Wenn im Sinne der Erfindung von aliphatischen Aminen die Rede ist, dann können darunter primäre aliphatische Amine, sekundäre aliphatische Amine oder tertiäre aliphatische Amine gemeint sein. In einer bevorzugten Ausführungsform sind die aliphatischen Amine jedoch primäre aliphatische Amine, da sich hiermit die erfindungsgemäßen Vorteile am besten einstellen. Dies gilt analog für die genannten aromatischen bzw. aliphatischen Amine wie Diamine.

Im Sinne der Erfindung wird unter Alkanolaminen, auch Aminoalkohole genannt, eine Stoffgruppe von organischen Verbindungen verstanden, die zugleich mindestens zwei funktionelle Gruppen enthält, davon eine Hydroxylgruppe und eine Aminogruppe. Dabei kann letztere eine primäre, sekundäre oder tertiäre Aminofunktion sein. Eine bifunktionelle Verbindung ist beispielsweise eine Verbindung, die zwei solcher funktionellen Gruppen enthält. Bevorzugt ist das Alkanolamin ausgewählt aus Monoethanolamin, N-Propylalcoholamin oder Mischungen daraus. Die technisch wichtigen Vertreter der Aminoalkohole sind Mono-, Di- und Triethanolamin, Dimethylaminoethanol, Diethylaminoethanol, N-Methyldiethanolamin sowie Mono-, Di- und Triisopropanolamin. Auch diese könnten für sich oder als Mischung gesehen gemäß der vorliegenden Erfindung Verwendung finden.

Bevorzugt weist das NDI-basierte Präpolymer einen NCO-Gehalt von 4 bis 20 Gew.-%, bevorzugt von 5 bis 14 Gew.-% auf. Hierdurch können mehr reaktive Gruppen im Polymer zur Verfügung gestellt werden, wodurch sich die Härte des Pressmantels besser einstellen lässt.

Die eingangs beschriebenen erfindungsgemäßen Vorteile werden besonders zufriedenstellend erfüllt, wenn der E-Modul und/oder die Härte der ersten Polymerschicht größer ist/sind als der entsprechende Wert der zweiten oder dritten Polymerschicht.

Die Erfindung betrifft auch eine Presswalze, wie Schuhpresswalze, für eine Schuhpresse zur Entwässerung einer Faserstoffbahn, wobei die Presswalze wenigstens einen erfindungsgemäßen Pressmantel aufweist.

Auch betrifft die Erfindung eine Schuhpresse zur Entwässerung einer Faserstoffbahn, bevorzugt einer Papier-, Karton-, Tissue- oder Zellstoffbahn, umfassend eine Presswalze und eine Gegenwalze, die zusammen einen Nip ausbilden oder begrenzen, wobei die Presswalze einen umlaufenden Pressmantel umfasst, wobei der Pressmantel gemäß der Erfindung ausgebildet ist.

Schließlich betrifft die Erfindung die Verwendung eines erfindungsgemäßen Pressmantels für eine Presse, wie Schuhpresse zur Entwässerung einer Faserstoffbahn, bevorzugt einer Papier-, Karton-, Tissue- oder Zellstoffbahn.

Die Erfindung wird nachfolgend unter Bezugnahme auf die Zeichnungen ohne Einschränkung der Allgemeinheit näher erläutert. In den Zeichnungen zeigen:
- Fig. 1: eine teilgeschnittene, schematische Seitenansicht einer Schuhpresse mit einem Pressmantel gemäß eines Ausführungsbeispiels der vorliegenden Erfindung.
- Fig. 2a, 2b und 2c: Ausführungsbeispiele von Pressmänteln jeweils in einem Schnitt durch deren Längsachse gesehen;
- Fig. 3: eine stark schematisierte Darstellung der Durchführung des erfindungsgemäßen Verfahrens in einer Seitenansicht auf eine Vorrichtung zur Herstellung des Pressmantels.

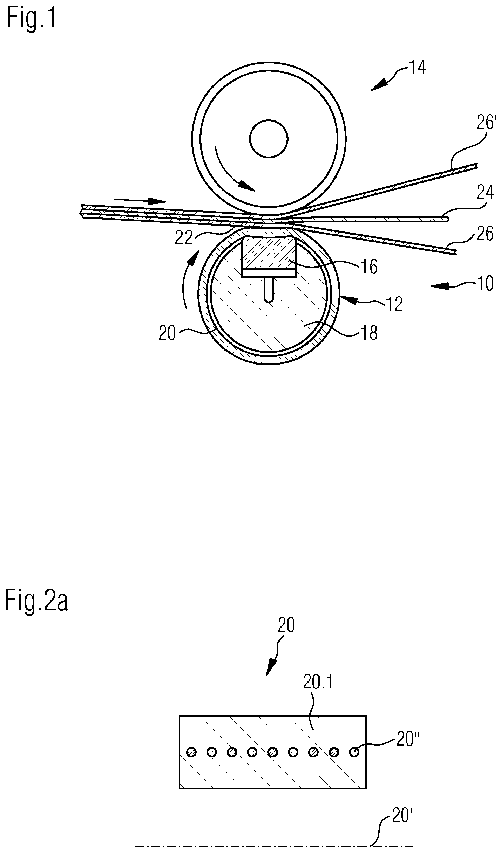

In der Fig. 1 ist eine Schuhpresse 10 dargestellt, welche vorliegend eine erfindungsgemäße Presswalze, wie Schuhpresswalze 12, und eine Gegenwalze 14 umfasst. Schuhpresswalze 12 und Gegenwalze 14 sind hinsichtlich ihrer Längsachsen parallel zueinander angeordnet. Sie bilden zusammen einen Nip 22 aus oder begrenzen einen solchen.

Während die Gegenwalze 14 hier aus einer um ihre Längsachse rotierenden zylindrisch ausgestalteten Walze besteht, ist die Schuhpresswalze 12 aus einem Schuh 16, einem diesen tragenden stehenden Joch 18 und einem Pressmantel 20 zusammengesetzt. Schuh 16 und Joch 18 sind in Bezug auf die Gegenwalze 14 bzw. den Pressmantel 20 feststehend angeordnet. Das bedeutet, sie rotieren nicht. Dabei wird der Schuh 16 durch das Joch 18 abgestützt und über nicht dargestellte, hydraulische Presselemente an die radial innerste Oberfläche des relativ dazu umlaufenden Pressmantels 20 angepresst. Der Pressmantel 20, der Schuh 16 und Joch 18 in Umfangsrichtung umgibt, dreht sich dabei um seine Längsachse im entgegengesetzten Drehsinn zu der Gegenwalze 14. Aufgrund der konkaven Ausgestaltung des Schuhs 16 an seiner der Gegenwalze 14 zugewandten Seite ergibt sich ein vergleichsweise langer Nip 22.

Die Schuhpresse 10 eignet sich insbesondere zur Entwässerung von Faserstoffbahnen 24. Bei dem Betrieb der Schuhpresse wird eine Faserstoffbahn 24 mit einem oder zwei Pressfilzen 26, 26' durch den Pressspalt 22 geführt. Im vorliegenden Fall sind es genau zwei Pressfilze 26, 26', die die Faserstoffbahn 24 sandwichartig zwischen sich aufnehmen. Beim Durchgang durch den Nip 22 wird im Nip 22 auf die Faserstoffbahn 24 durch die Pressfilze 26, 26' mittelbar ein Druck ausgeübt. Dies geschieht dadurch, dass die radial äußerste Oberfläche der Gegenwalze 14 einerseits und die radial äußerste Oberfläche des Pressmantels 20 unmittelbar mit den entsprechenden Pressfilzen 26, 26' in Kontakt kommen. Die aus der Faserstoffbahn 24 austretende Flüssigkeit wird von dem bzw. den Pressfilzen 26, 26' und etwaigen in der Pressmanteloberfläche vorgesehen Vertiefungen (nicht dargestellt) vorübergehend aufgenommen. Nach dem Verlassen des Nips 22 wird die von den Vertiefungen des Pressmantels 20 aufgenommene Flüssigkeit abgeschleudert, bevor der Pressmantel 20 erneut in den Presspalt 22 eintritt. Zudem kann das von dem Pressfilz 26, 26' aufgenommene Wasser nach dem Verlassen des Pressspalts 22 mit Saugelementen entfernt werden.

Der in Figur 1 dargestellte Pressmantel kann, wie in den nachfolgenden Figuren dargestellt, gemäß der Erfindung ausgeführt sein.

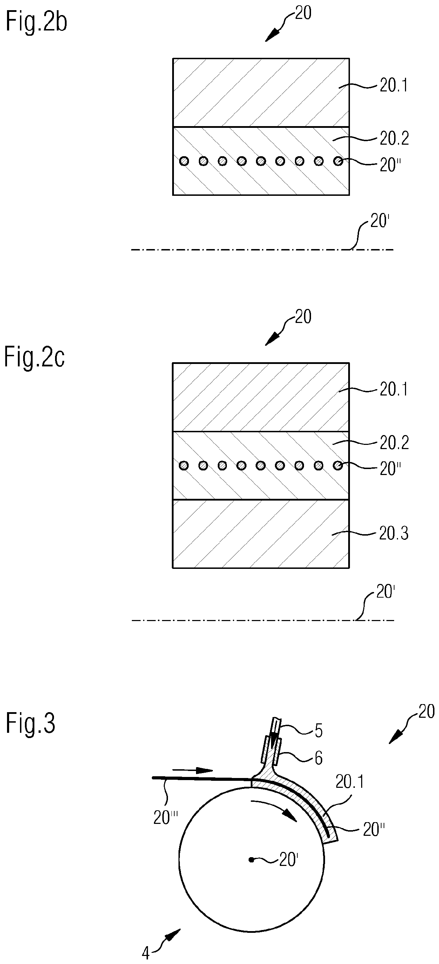

In den Fig. 2a, 2b und 2c sind in einem nicht maßstäblichen, teilweise dargestellten Querschnitt durch die Längsachse 20' unterschiedliche Pressmäntel dargestellt. Der Abstand der Längsachse 20' zu der radial innersten Oberfläche der entsprechenden Polymerschicht ist ebenfalls nicht maßstäblich dargestellt.

Fig. 2a zeigt einen Pressmantel 20 mit einer einzigen Polymerschicht 20.1. Vorliegend ist in die einzige Polymerschicht 20.1 eine Verstärkungsstruktur 20" eingebettet. Dies ist durch die schraffierten Kreise, die textile Flächen- bzw. Liniengebilde wie Fasern sein können, angedeutet. Die Verstärkungsstruktur ist vollständig in die Polymerschicht 20.1 eingebettet, das bedeutet, dass sich die Verstärkungsstruktur 20" nicht über die Begrenzungen der Polymerschicht 20.1 hinauserstreckt.

Die erste Polymerschicht 20.1 ist hier aus Polyurethan gebildet, das aus einem Präpolymer und einem Vernetzer hergestellt wird. Das Präpolymer ist ein Reaktionsprodukt aus Naphthalen-1,5-diisocyanat (NDI) oder 1,4-Phenylendiisocyanat (PPDI) als Isocyanat und wenigstens einem Polyol ist, das ausgewählt ist aus einem Polycarbonat-Polyol, einem Polytetramethylenetherglycol (PTMEG), Polyether-Polycarbonat-Polyol oder Mischungen dieser Die Fig. 2b und 2c zeigen als Abwandlung der Fig. 2a jeweils einen mehrschichtigen Pressmantel 20. So sind gemäß der Fig. 2b, die einer Ausführungsform der Erfindung entspricht, genau zwei Polymerschichten vorgesehen, nämlich eine erste 20.1 und eine zweite 20.2. Im vorliegenden Fall ist die erste Polymerschicht 20.1 zugleich die radial äußerste Polymerschicht des Pressmantels 20. Hingegen ist die zweite Polymerschicht 20.2 zugleich die radial innerste Polymerschicht des Pressmantels 20. Wie dargestellt, kann in der zweiten Polymerschicht 20.2 eine Verstärkungsstruktur 20" vorgesehen sein. Im vorliegenden Falle sind die erste und eine zweite Polymerschicht 20.1, 20.2, aus einem Polyurethan hergestellt. Dieses ist erhältlich aus einem Präpolymer und einem Vernetzer. Erfindungsgemäß
ist das Präpolymer der ersten Polymerschicht 20.1 ein Reaktionsprodukt aus Naphthalen-1,5-diisocyanat (NDI) und wenigstens einem Polyol. Letzteres ist ausgewählt aus einem Polycarbonat-Polyol, einem Polyether-Polycarbonat-Polyol oder Mischungen dieser beiden.

Hingegen ist das Präpolymer der zweiten Polymerschicht 20.2 ein Reaktionsprodukt aus Naphthalen-1,5-diisocyanat (NDI) und wenigstens einem Polytetramethylenetherglycol (PTMEG). Alternativ kann diese aus einem 1,4-Phenylendiisocyanat (PPDI), 4,4'-Diphenylmethandiisocyanat (MDI), Toluol-2,4-diisocyanat (TDI) oder 3,3'-Dimethyl-4,4'-biphenylendiisocyanat (TODI) und einem Polyol hergestellt sein. Letzteres kann beispielsweise Polytetramethylenetherglycol (PTMEG) sein.

Im Übrigen gilt das bereits zu Fig. 2a Gesagte.

Figur 2c zeigt einen dreischichtigen Pressmantel mit einer - hier radial äußersten, - ersten Polymerschicht 20.1, einer radial innersten, dritten Polymerschicht 20.3 und einer zwischen diesen beiden sandwichartig angeordneten zweiten Polymerschicht 20.2. Die Anordnung bezieht sich - wie auch in der Darstellung der Fig. 2b - ausgehend von der Längsachse 20' des Pressmantels 20 in dessen Radialrichtung gesehen. Vorliegend ist lediglich in der zweiten Polymerschicht 20.2 eine (einzige) Verstärkungsstruktur 20" vorgesehen. Selbstverständlich könnte dies auch anders sein, sodass alternativ oder zusätzlich eine solche Verstärkungsstruktur 20" auch in der ersten Polymerschicht 20.1 und/oder der dritten Polymerschicht 20.3 angeordnet sein könnte. Auch hier sind die erste und die zweite Polymerschicht 20.1, 20.2 jeweils aus einem Polyurethan hergestellt oder enthalten ein solches. Das entsprechende Präpolymer der ersten Polymerschicht 20.1 kann hier ein Reaktionsprodukt aus 1,4-Phenylendiisocyanat (PPDI), NDI, TODI, TDI oder 4,4'-Diphenylmethandiisocyanat (MDI) bzw. eine Mischung dieser beiden sein. Das dazugehörige wenigstens eine Polyol kann ausgewählt sein aus einem Polycarbonat-Polyol, einem Polyether-Polycarbonat-Polyol oder Mischungen davon. Dabei ist das Präpolymer der zweiten und dritten Polymerschicht 20.2, 20.3 ein Reaktionsprodukt aus Naphthalen-1,5-diisocyanat (NDI) und wenigstens einem Polytetramethylenetherglycol (PTMEG).

Für die Fig. 2d gilt überdies das bereits zu den Fig. 2a und 2b Gesagte.

Die erfindungsgemäße Ausbildung garantiert die besonders hohe Stabilität des Pressmantels 20 hinsichtlich der mechanischen und dynamischen Eigenschaften wie Stabilität, Oberflächenhärte, Beständigkeit gegen Druck, Temperatur und Hydrolyse sowie einer geringen Quellung. Diese Eigenschaften führen im Betrieb zu einer verlängerten Lebensdauer des Pressmantels 20.

Fig. 3 zeigt in einer stark schematisierten Seitenansicht eine Vorrichtung zur Herstellung eines erfindungsgemäßen Pressmantels 20. Die Vorrichtung weist vorliegend genau einen zylindrischen Wickeldorn 4 auf, wobei hier auf dessen radial äußerste Mantelfläche z.B. ein Ausgangsmaterial 20‴ spiralig aufgebracht wird. Das Ausgangsmaterial 20"" bildet nach Einbettung in das Polymer die Verstärkungsstruktur 20" des erfindungsgemäßen fertigen Pressmantels 20.

Die Darstellung zeigt ein Anfangsstadium des Herstellungsverfahrens. Im vorliegenden Fall ist dazu das eine Ende des Ausgangsmaterials 20‴ auf einem Polymer, das auf dem Außenumfang des Wickeldorns 4 angeordnet ist, befestigt. Abgesehen von der gezeigten schematischen Darstellung könnte das eine Ende des Ausgangsmaterials 20‴ auch direkt, also unmittelbar auf dem Wickeldorn 4 aufliegen oder aufgebracht werden, ohne dass anfangs zwischen Ausgangsmaterial 20‴ und Wickeldorn 4 ein Polymer vorgesehen ist. Das Ausgangsmaterial 20‴ kann dabei ein textiles Flächengebilde oder Liniengebilde sein.

Der Wickeldorn 4 ist um seine Längsachse 20', die der Längsachse des herzustellenden Pressmantels entspricht, rotierbar gelagert. Längsachse 20' verläuft hier senkrecht in die Zeichenebene hinein. Über eine Leitung 5 wird durch eine Gießdüse 6 ein Gießmaterial, wie gießfähiges, aushärtbares elastomeres Polymer, z.B. Polyurethan, von oben auf die radial äußerste Mantelfläche des Wickeldorns 4 bzw. auf das Ausgangsmaterial 20‴ gegeben. Ein solches Gießmaterial kann z.B. hinsichtlich seiner Topfzeit und Viskosität derart gewählt werden, dass es beim Gießen nicht vom Wickeldorn 4 heruntertropft. Währenddessen wird der Wickeldorn 4 in Pfeilrichtung um dessen Längsachse gedreht. Gleichzeitig mit dieser Drehung wird die Gießdüse 6 über eine geeignete, in Fig. 3 nicht weiter dargestellte Führung parallel zur Längsachse 20 entlang dieser relativ an dem Wickeldorn 4 entlanggeführt. Gleichzeitig mit dem Aufgießen des Gießmaterials wird das Ausgangsmaterial 20‴ abgerollt und auf den sich drehenden Wickeldorn 4 z.B. zu Wendeln gewickelt. Dabei kann das Gießmaterial durch das Ausgangsmaterial 20‴ hindurch bis auf den Wickeldorn 4 gelangen. Das Polymer bildet in diesem Beispiel nach dem Schritt des Aushärtens eine erste, hier radial innerste und bevorzugt elastomere Polymerschicht 20.1 des Pressmantels, wovon in Fig. 3 nur ein Teil gezeigt ist.

Das aus der Gießdüse 6 austretende Gießmaterial ist ein Gemisch aus einem Präpolymer und einem Vernetzer. Ersteres wird aus einem nicht gezeigten Präpolymer-Behälter bereitgestellt, in dem es gespeichert oder angerührt wird. Das Präpolymer kann ein erfindungsgemäßes Isocyanat und ein Polyol umfassen. In dem Präpolymer-Behälter kann es zum Beispiel in Form eines Präpolymers aus den eben genannten Stoffen vorliegen.

Der Vernetzer kann in einem Vernetzer-Behälter bereitgestellt werden. Der Vernetzer kann BDO, HQEE, MCDEA, wenigstens ein Diamin, wie ein aromatisches oder aliphatisches Diamin oder Alkanolamin, EDA, 2,2,4-Trimethyl-1,6-Hexandiamin, 2,4,4-Trimethyl-1,6-Hexandiamin, HMDA, DETDA, 4,4'-Diaminodicyclohexylmethane oder DMTDA umfassen. Grundsätzlich wären auch Mischungen der vorgenannten Stoffe denkbar. Der Vernetzer kann aber auch eine weitere Komponente umfassen, wie wenigstens ein Polyol und/oder auch einen Katalysator aufweisen. Der Vernetzer mit seinen entsprechenden Komponenten kann direkt im Vernetzer-Behälter angerührt werden. Denkbar ist, jedoch auch, dass die Vorrichtung für jede der Komponenten einen entsprechenden Einzelbehälter umfasst, der über nicht dargestellte Leitungen strömungsleitend mit dem Vernetzer-Behälter verbunden ist, um den erfindungsgemäßen Vernetzer im Vernetzer-Behälter herzustellen.

Präpolymer-Behälter und Vernetzer-Behälter sind der Vorrichtung zur Herstellung eines Pressmantels 20 zugeordnet. Sie sind über ebenfalls nicht dargestellte Leitungen strömungsleitend mit einer der Gießdüse 6 in Strömungsrichtung vorgeschalteten Mischkammer (nicht dargestellt) verbunden. Das Präpolymer-Vernetzer-Gemisch wird also stromauf und außerhalb der Gießdüse 6 hergestellt, also in der Mischkammer gemischt. Unabhängig von der Herstellung des Gemisches wird dieses dann auf die Oberfläche des Wickeldorns 4 zum Bilden der zumindest einen Polymerschicht 20.1 des Pressmantels 20 aufgebracht.

Mittels eines solchen kontinuierlichen Gießvorgangs, der auch als Rotationsguss bekannt ist, wird also nach und nach über die Breite des Wickeldorns 4 ein endloser, um dessen Längsachse 20' in sich geschlossener zylinderrohrförmiger Pressmantel 20 hergestellt, dessen Innenumfang im Wesentlichen dem Außenumfang des Wickeldorns 4 entspricht.

Grundsätzlich wäre es denkbar das Ausgangsmaterial 20‴ auf mehr als den einen in Fig. 3 gezeigten Wickeldorn 4 zu wickeln. Beispielsweise könnten zwei Wickeldorne vorgesehen sein, die parallel hinsichtlich ihrer Längsachsen mit Abstand zueinander angeordnet sein könnten. Alternativ wäre es auch denkbar, das Polymer auch auf die radial innere Mantelfläche des Wickeldorns 4, z.B. nach Art des Schleuderns, aufzubringen.

Unabhängig von der angesprochenen Ausführungsform wird der fertige Pressmantel 20 schließlich von dem wenigstens einen Wickeldorn 4 abgenommen.

Wie in den Figuren dargestellt, ist der Pressmantel 20 gemäß der Erfindung ausgeführt. Das Polyurethan ist dabei aus einem erfindungsgemäßen Präpolymer - das ein Reaktionsprodukt aus wenigstens einem Polyol mit einem Isocyanat ist - und einem Vernetzer gebildet. Der Vernetzer umfasst z.B. die eingangs genannten Komponenten. Ersterer kann aber auch weitere, dem Fachmann bekannte Komponenten aufweisen.

## Patentansprüche

1. Pressmantel (20) in Form eines endlosen Bandes bzw. Schlauches für eine Schuhpresswalze, umfassend wenigstens eine erste und eine zweite Polymerschicht (20.1, 20.2), die jeweils ein Polyurethan enthalten oder aus diesem hergestellt sind, und das Polyurethan gebildet ist aus einem Präpolymer und einem Vernetzer, wobei
- das Präpolymer der ersten Polymerschicht (20.1) ein Reaktionsprodukt aus Naphthalen-1,5-diisocyanat (NDI) als Isocyanat und wenigstens einem Polyol ist, das ausgewählt ist aus einem Polycarbonat-Polyol, einem Polyether-Polycarbonat-Polyol oder Mischungen dieser beiden,
**dadurch gekennzeichnet, dass** das Präpolymer der zweiten Polymerschicht (20.2) ein Reaktionsprodukt ist aus:
- Naphthalen-1,5-diisocyanat (NDI) als Isocyanat und Polytetramethylenetherglycol (PTMEG) als Polyol, oder
- 1,4-Phenylendiisocyanat (PPDI), 4,4'-Diphenylmethandiisocyanat (MDI), Toluol-2,4-diisocyanat (TDI) oder 3,3'-Dimethyl-4,4'-biphenylendiisocyanat (TODI) als Isocyanat und einem Polyol, wie Polytetramethylenetherglycol (PTMEG).

2. Pressmantel nach Anspruch 1, **dadurch gekennzeichnet, dass** die erste Polymerschicht (20.1) in Bezug auf die Längsachse (20') des Pressmantels (20) gesehen dessen radial äußerste Polymerschicht ist.

3. Pressmantel (20) nach einem der Ansprüche 1 oder 2, **dadurch gekennzeichnet, dass** der Pressmantel (20) eine dritte Polymerschicht (20.3), die in Bezug auf die Längsachse (20') des Pressmantels (20) gesehen dessen radial innerste Schicht ist, sodass die zweite Polymerschicht (20.2) in Radialrichtung gesehen zwischen der dritten Polymerschicht (20.3) und der ersten Polymerschicht (20.1) angeordnet ist, wobei das Präpolymer der dritten Polymerschicht (20.3) ein Reaktionsprodukt ist aus:
- Naphthalen-1,5-diisocyanat (NDI) als Isocyanat und Polytetramethylenetherglycol (PTMEG) als Polyol, oder
- 1,4-Phenylendiisocyanat (PPDI), 4,4'-Diphenylmethandiisocyanat (MDI), Toluol-2,4-diisocyanat (TDI) oder 3,3'-Dimethyl-4,4'-biphenylendiisocyanat (TODI) als Isocyanat und einem Polyol, wie Polytetramethylenetherglycol (PTMEG).

4. Pressmantel (20) nach einem der vorstehenden Ansprüche, **dadurch gekennzeichnet, dass** der Vernetzer die folgenden Komponenten umfasst:
- 1,4-Butandiol (BDO), 1,4-Hydroquinone bis(2-hydroxyethyl)ether (HQEE), 4,4'-Methylenebis(3-Chloro-2,6-Diethylaniline) (MCDEA), ein aliphatisches oder aromatisches Amin, ein aliphatisches oder aromatisches Diamin, ein Alkanolamin, Ethylendiamin (EDA), 2,2,4-Trimethyl-1,6-Hexandiamin, 2,4,4-Trimethyl-1,6-Hexandiamin, Hexamethylendiamin (HMDA), Diethyltoluenediamin (DETDA), 4,4'-Diaminodicyclohexylmethane, Dimethylthiotoluenediamin (DMTDA), Monoethanolamin oder Mischungen daraus.

5. Pressmantel (20) nach einem der Ansprüche 1 bis 3, **dadurch gekennzeichnet, dass** der Vernetzer der radial äußersten Polymerschicht 1,4-Butandiol (BDO) oder wenigstens ein Amin und der Vernetzter der radial innersten Polymerschicht wenigstens ein Amin umfasst, wobei das jeweilige vorgenannte Amin ein aromatisches oder aliphatisches Amin, ein aromatisches oder aliphatisches Diamin oder ein Alkanolamin ist.

6. Pressmantel (20) nach einem der vorstehenden Ansprüche, **dadurch gekennzeichnet, dass** der Vernetzer eine weitere Komponente umfasst, die ausgewählt ist aus wenigstens einem Polyol, bevorzugt bifunktionellem Polyol, dessen Molekulargewicht bevorzugt zwischen 1.000 bis 4.000 g/mol und bevorzugt zwischen 1.200 bis 3.500 g/mol beträgt, wie Polyesterpolyol, insbesondere Polycaprolactonpolyol; Polyetherpolyole, insbesondere Polytetramethylenetherglycol (PTMEG), Polypropylenglycol (PPG), Polyethylenglycol (PEG), Polyhexamethylenetherglycol, Polycarbonatpolyol, Polyethercarbonatpolyol, Polybutadienepolyol, Perfluoropolyetherpolyol, Silikonpolyol oder Mischungen daraus.

7. Pressmantel (20) nach einem der vorstehenden Ansprüche, **dadurch gekennzeichnet, dass** das NDI-basierte Präpolymer zur Herstellung der wenigstens einen Polymerschicht (20.1, 20.2, 20.3) einen NCO-Gehalt von 4 bis 20 Gew.-%, bevorzugt von 5 bis 14 Gew.-% aufweist.

8. Pressmantel (20) nach einem der vorstehenden Ansprüche, **dadurch gekennzeichnet, dass** zur Herstellung der wenigstens einen Polymerschicht (20.1, 20.2, 20.3) das Verhältnis der tatsächlich eingesetzten Isocyanatmenge des Präpolymers zur berechneten, stöchiometrischen Isocyanatmenge zwischen 0,8 und 1,2 liegt.

9. Pressmantel (20) nach einem der vorstehenden Ansprüche 3 bis 8, **dadurch gekennzeichnet, dass** bei Vorsehen mindestens einer ersten und einer zweiten Polymerschicht (20.1, 20.2, 20.3) der E-Modul und/oder die Härte der ersten Polymerschicht (20.1) größer ist als der entsprechende Wert der zweiten und/oder dritten Polymerschicht (20.2, 20.3).

10. Verwendung eines Pressmantels (20) nach einem der vorstehenden Ansprüche für eine Schuhpresse (10) zur Behandlung einer Faserstoffbahn (24), bevorzugt einer Papier-, Karton-, Tissue- oder Zellstoffbahn.

## Claims

1. Press cover (20) in the form of a continuous belt or hose for a shoe press roll, comprising at least one first and one second polymer layer (20.1, 20.2), each of which contains or has been produced from a polyurethane, and the polyurethane has been formed from a prepolymer and a crosslinker, wherein
- the prepolymer of the first polymer layer (20.1) is a reaction product of naphthalene 1,5-diisocyanate (NDI) as isocyanate and at least one polyol selected from a polycarbonate polyol, a polyether polycarbonate polyol or mixtures of the two,
**characterized in that** the prepolymer of the second polymer layer (20.2) is a reaction product of:
- naphthalene 1,5-diisocyanate (NDI) as isocyanate and polytetramethylene ether glycol (PTMEG) as polyol, or
- phenylene 1,4-diisocyanate (PPDI), diphenylmethane 4,4'-diisocyanate (MDI), toluene 2,4-diisocyanate (TDI) or 3,3'-dimethyl-4,4'-biphenylene diisocyanate (TODI) as isocyanate and a polyol such as polytetramethylene ether glycol (PTMEG).

2. Press cover according to Claim 1, **characterized in that** the first polymer layer (20.1) is the radially outermost polymer layer thereof, viewed in relation to the longitudinal axis (20') of the press cover (20).

3. Press cover (20) according to either of Claims 1 and 2, **characterized in that** the press cover (20) a third polymer layer (20.3) which is the radially innermost layer thereof viewed in relation to the longitudinal axis (20') of the press cover (20), such that the second polymer layer (20.2) is disposed between the third polymer layer (20.3) and the first polymer layer (20.1) viewed in radial direction, wherein the prepolymer of the third polymer layer (20.3) is a reaction product of:
- naphthalene 1,5-diisocyanate (NDI) as isocyanate and polytetramethylene ether glycol (PTMEG) as polyol, or
- phenylene 1,4-diisocyanate (PPDI), diphenylmethane 4,4'-diisocyanate (MDI), toluene 2,4-diisocyanate (TDI) or 3,3'-dimethyl-4,4'-biphenylene diisocyanate (TODI) as isocyanate and a polyol such as polytetramethylene ether glycol (PTMEG).

4. Press cover (20) according to any of the preceding claims, **characterized in that** the crosslinker comprises the following components:
- butane-1,4-diol (BDO), hydroquinone 1,4-bis(2-hydroxyethyl) ether (HQEE), 4,4'-methylenebis(3-chloro-2,6-diethylaniline) (MCDEA), an aliphatic or aromatic amine, an aliphatic or aromatic diamine, an alkanolamine, ethylenediamine (EDA), 2,2,4-trimethylhexane-1,6-diamine, 2,4,4-trimethylhexane-1,6-diamine, hexamethylenediamine (HMDA), diethyltoluenediamine (DETDA), 4,4'-diaminodicyclohexylmethane, dimethylthiotoluenediamine (DMTDA), monoethanolamine or mixtures thereof.

5. Press cover (20) according to any of Claims 1 to 3, **characterized in that** the crosslinker of the radially outermost polymer layer comprises butane-1,4-diol (BDO) or at least one amine and the crosslinker of the radially innermost polymer layer comprises at least one amine, wherein the respective aforementioned amine is an aromatic or aliphatic amine, an aromatic or aliphatic diamine or an alkanolamine.

6. Press cover (20) according to any of the preceding claims, **characterized in that** the crosslinker comprises a further component selected from at least one polyol, preferably bifunctional polyol, having a molecular weight of preferably between 1000 and 4000 g/mol and preferably between 1200 and 3500 g/mol, such as polyester polyol, especially polycaprolactone polyol; polyether polyols, especially polytetramethylene ether glycol (PTMEG), polypropylene glycol (PPG), polyethylene glycol (PEG), polyhexamethylene ether glycol, polycarbonate polyol, polyether carbonate polyol, polybutadiene polyol, perfluoropolyether polyol, silicone polyol or mixtures thereof.

7. Press cover (20) according to any of the preceding claims, **characterized in that** the NDI-based prepolymer for production of the at least one polymer layer (20.1, 20.2, 20.3) has an NCO content of 4% to 20% by weight, preferably of 5% to 14% by weight.

8. Press cover (20) according to any of the preceding claims, **characterized in that**, for production of the at least one polymer layer (20.1, 20.2, 20.3), the ratio of the amount of isocyanate actually used in the prepolymer to the calculated stoichiometric amount of isocyanate is between 0.8 and 1.2.

9. Press cover (20) according to any of the preceding Claims 3 to 8, **characterized in that**, in the case of provision of at least one first and one second polymer layer (20.1, 20.2, 20.3), the modulus of elasticity and/or the hardness of the first polymer layer (20.1) is greater than the corresponding value of the second and/or third polymer layer (20.2, 20.3).

10. Use of a press cover (20) according to any of the preceding claims for a shoe press (10) for treatment of a fibrous material web (24), preferably a paper, cardboard, tissue or pulp web.

## Revendications

1. Chemise (20) de presse, sous forme d'une bande ou gaine sans fin pour un cylindre de presse à sabot, comprenant au moins une première et une deuxième couche de polymère (20.1, 20.2) qui chacune contiennent un polyuréthane ou sont produites à partir de celui-ci, et le polyuréthane est formé à partir d'un prépolymère et d'un agent de réticulation,
- le prépolymère de la première couche de polymère (20.1) étant un produit de réaction de 1,5-diisocyanate de naphtalène (NDI) en tant qu'isocyanate et d'au moins un polyol qui est choisi parmi un polycarbonate-polyol, un polyéther-polycarbonate-polyol ou des mélanges de ces deux,
**caractérisée en ce que** le prépolymère de la deuxième couche de polymère (20.2) est un produit de réaction de :
- 1,5-diisocyanate de naphthalène (NDI) en tant qu'isocyanate et polytétraméthylène-étherglycol (PTMEG) en tant que polyol, ou
- 1,4-diisocyanate de phénylène (PPDI), 4,4'-diisocyanate de diphénylméthane (MDI), 2,4-diisocyanate de toluène (TDI) ou 4,4'-diisocyanato-3,3'-diméthylbiphényle (TODI) en tant qu'isocyanate et d'un polyol, tel que le polytétraméthylène-étherglycol (PTMEG).

2. Chemise de presse selon la revendication 1, **caractérisée en ce que** la première couche de polymère (20.1) vue par rapport à l'axe longitudinal (20') de la chemise (20) de presse est la couche de polymère radialement la plus externe de cette dernière.

3. Chemise de presse selon l'une quelconque des revendications 1 et 2, **caractérisée en ce que** la chemise (20) de presse une troisième couche de polymère (20.3) qui, vue par rapport à l'axe longitudinal (20') de la chemise (20) de presse, est la couche radialement la plus interne de cette dernière, de sorte que la deuxième couche de polymère (20.2), vue en direction radiale, est disposée entre la troisième couche de polymère (20.3) et la première couche de polymère (20.1), le prépolymère de la troisième couche de polymère (20.3) étant un produit de réaction de :
- 1,5-diisocyanate de naphthalène (NDI) en tant qu'isocyanate et polytétraméthylène-étherglycol (PTMEG) en tant que polyol, ou
- 1,4-diisocyanate de phénylène (PPDI), 4,4'-diisocyanate de diphénylméthane (MDI), 2,4-diisocyanate de toluène (TDI) ou 4,4'-diisocyanato-3,3'-diméthylbiphényle (TODI) en tant qu'isocyanate et d'un polyol, tel que le polytétraméthylène-étherglycol (PTMEG).

4. Chemise (20) de presse selon l'une quelconque des revendications précédentes, **caractérisée en ce que** l'agent de réticulation comprend les composants suivants :
- 1,4-butanediol (BDO), 1,4-hydroquinone bis(2-hydroxyéthyl)éther (HQEE), 4,4'-méthylènebis(3-chloro-2,6-diéthylaniline) (MCDEA), une amine aliphatique ou aromatique, une diamine aliphatique ou aromatique, une alcanolamine, l'éthylènediamine (EDA), la 2,2,4-triméthyl-1,6-hexanediamine, la 2,4,4-triméthyl-1,6-hexanediamine, l'hexaméthylènediamine (HMDA), la diéthyltoluènediamine (DETDA), le 4,4'-diaminodicyclohexylméthane, la diméthylthiotoluènediamine (DMTDA), la monoéthanolamine ou des mélanges de tels composants.

5. Chemise (20) de presse selon l'une quelconque des revendications 1 à 3, **caractérisée en ce que** l'agent de réticulation de la couche de polymère radialement la plus externe comprend le 1,4-butanediol (BDO) ou au moins une amine et l'agent de réticulation de la couche de polymère radialement la plus interne comprend au moins une amine, l'amine respective précitée étant une amine aliphatique ou aromatique, une diamine aliphatique ou aromatique ou une alcanolamine.

6. Chemise (20) de presse selon l'une quelconque des revendications précédentes, **caractérisée en ce que** l'agent de réticulation comprend un autre composant qui est choisi parmi au moins un polyol, de préférence polyol bifonctionnel, dont la masse moléculaire est comprise de préférence entre 1 000 et 4 000 g/mole et de préférence entre 1 200 et 3 500 g/mole, tel qu'un polyesterpolyol, en particulier le polycaprolactonepolyol ; les polyétherpolyols, en particulier le polytétraméthylene-étherglycol (PTMEG), le polypropylèneglycol (PPG), le polyéthylèneglycol (PEG), le polyhexaméthylene-étherglycol, le polycarbonatepolyol, le polyéthercarbonate-polyol, le polybutadiènepolyol, le perfluoropolyétherpolyol, le siliconepolyol ou des mélanges de ceux-ci.

7. Chemise (20) de presse selon l'une quelconque des revendications précédentes, **caractérisée en ce que** le prépolymère à base de NDI destiné à la production de ladite au moins une couche de polymère (20.1, 20.2, 20.3) présente une teneur en NCO de 4 à 20 % en poids, de préférence de 5 à 14 % en poids.

8. Chemise (20) de presse selon l'une quelconque des revendications précédentes, **caractérisée en ce que** dans la production de ladite au moins une couche de polymère (20.1, 20.2, 20.3) le rapport de la quantité d'isocyanate du prépolymère réellement utilisée à la quantité stœchiométrique d'isocyanate calculée se situe entre 0,8 et 1,2.

9. Chemise (20) de presse selon l'une quelconque des revendications 3 à 8 précédentes, **caractérisée en ce qu'**en cas de prévision d'au moins une première et une deuxième couche de polymère (20.1, 20.2, 20.3) le module d'élasticité et/ou la dureté de la première couche de polymère (20.1) est/sont supérieur(e/s) à la valeur correspondante de la deuxième et/ou troisième couche(s) de polymère (20.2, 20.3)

10. Utilisation d'une chemise (20) de presse selon l'une quelconque des revendications précédentes, pour une presse à sabot (10) destinée à la manutention d'une bande (24) de matière fibreuse, de préférence d'une bande de papier, carton, papier mousseline ou pâte de cellulose.
